# EUROPEAN PATENT SPECIFICATION

(11) **EP 4 474 695 B1**
(45) Date of publication and mention of the grant of the patent: **29.04.2026**
(21) Application number: 23178267.3
(22) Date of filing: 08.06.2023
(51) Int. Cl.: F21V 8/00, G02B 27/00, G02B 27/01, G02B 27/42

(54) **OPTICAL DEVICE FOR AUGMENTED REALITY OR VIRTUAL REALITY DISPLAY**
OPTISCHE VORRICHTUNG FÜR ANZEIGE DER ERWEITERTEN REALITÄT ODER VIRTUELLEN REALITÄT
DISPOSITIF OPTIQUE POUR AFFICHAGE DE RÉALITÉ AUGMENTÉE OU DE RÉALITÉ VIRTUELLE

(43) Date of publication of application: 11.12.2024
(60) Divisional application: 26161686.6
(73) Proprietor: SNAP, INC., Santa Monica CA 90405 (US)
(72) Inventor: SOL, Christian, OX14 4SE Abingdon (GB); NOUMAN, Tayyab, OX14 4SE Abingdon (GB); PROCTOR, Matthew, OX14 4SE Abingdon (GB)
(74) Representative: Gill Jennings & Every LLP

(56) References cited:
- WO-A1-2022/115580
- WO-A1-2022/187664
- CN-A- 114 910 991
- CN-A- 114 935 790
- US-A1- 2018 113 313
- US-A1- 2021 157 148

## Description

### FIELD OF THE INVENTION

The present disclosure relates to optical devices suitable for use in displays such as augmented reality or virtual reality displays. Such optical devices typically comprise a waveguide and diffractive optical elements for coupling light into and out of the waveguide. Virtual reality and augmented reality displays include wearable devices, such as glasses, displays for video games, and screens for military or transportation applications.

### BACKGROUND

In a conventional augmented reality display, a transparent display screen is provided in front of a user so that they can continue to see the physical world. The display screen may be a glass waveguide, with a projector provided to one surface of the waveguide. The display screen may be provided in a pair of glasses or a window on a vehicle, for example. Light from the projector is coupled into the waveguide by an input structure (for example via diffraction or reflection). The projected light is totally internally reflected within the waveguide. The light is then coupled out of the waveguide by an output structure so that it can be viewed by a user. The projector can provide information and/or images that augment a user's view of the physical world.

An optical device is disclosed in WO 2016/020643 for expanding input light in two dimensions in an augmented reality display. An input diffractive optical element is provided for coupling input light from a projector into a waveguide. The optical device also includes an output element having two diffractive optical elements overlaid on one another in the waveguide so that each of the two diffractive optical elements can receive light from the input diffractive optical element and couple it towards the other diffractive optical element in the pair, which can then act as an output diffractive optical element which couples light out of the waveguide towards a user. In one embodiment the two diffractive optical elements overlaid on one another are provided in a photonic crystal. This is achieved by having an array of pillars arranged within or on the surfaces of the waveguide, having an increased refractive index relative to the surrounding waveguide medium. This arrangement has been found to be very effective at simultaneously expanding light in two dimensions and coupling light out of the waveguide. Advantageously this can improve the use of space on the waveguide which can decrease the cost of manufacture.

WO 2018/178626 describes one issue which can occur in an output element having two diffractive optical elements overlaid on one another, wherein a central strip in the output image has been observed as having a higher relative brightness than other parts, because the waveguide is oriented such that light enters the output element along a center line of the output element, and a large proportion of the light is diffracted out of the waveguide in a central strip around the center line before the light can be expanded across the whole width of the output element perpendicular to the center line.

More generally, the brightness of the light coupled out of the waveguide may be non-uniform across the area of the output element. This non-uniformity may be visible to a user when viewing light output from the waveguide, and may affect the uniformity of the image displayed using the waveguide, degrading the wearer experience.

Accordingly, it is desirable to provide further ways of improving uniformity in the light coupled out of the waveguide towards the user.

US 2021/157148 A1 forms part of the background art and discloses a waveguide display device, which is able to increase a brightness uniformity of a pupil output image, to improve a system output efficiency and to reduce manufacturing cost. WO 2022/187664 A1 also forms part of the background art and discloses an image light guide for conveying a virtual image including a substrate operable to propagate image-bearing light beams along a length thereof. WO 2022/115580 A1 also forms part of the background art and discloses an image light guide for conveying a virtual image, including a waveguide, an in-coupling diffractive optic operable to direct image-bearing light beams into the waveguide, and an out-coupling diffractive optic operable to direct the image-bearing light beams from the waveguide toward an eyebox. CN 114 935 790 A also forms part of the background art and discloses a diffractive optical waveguide and a display device. CN 114 910 991 A also forms part of the background art and discloses a diffractive optical waveguide and a display device. US 2018/113313 A1 also forms part of the background art and discloses an eyepiece for projecting an image to an eye of a viewer including a waveguide configured to propagate light therein, and a diffractive optical element optically coupled to the waveguide.

### SUMMARY OF INVENTION

According to an aspect, the following disclosure provides an optical device for use in an augmented reality or virtual reality display, comprising: a planar waveguide; an input diffractive optical element, DOE, configured to receive light from a projector and couple the light into the waveguide; the output DOE configured to receive light from the input diffractive optical element in an input direction, expand the light in two dimensions and couple the light out of the waveguide towards a user, the output DOE comprising a first diffractive region configured to diffract light within the waveguide, the first diffractive region having a first direction of periodicity and a second direction of periodicity, wherein an angle between the input direction and the first direction of periodicity is equal and opposite to an angle between the input direction and the second direction of periodicity, wherein the first diffractive region comprises an array of optical structures, wherein each optical structure is oriented in a third direction that is non-parallel to the first and second directions of periodicity, and is configured to couple light out of the waveguide towards the user.

The third direction enables tuning of the efficiency with which optical structures couple light out of the waveguide towards the user. This can be used to improve uniformity of light output from the optical device.

According to the claimed invention, each optical structure has a polygon shape in the plane of the waveguide, wherein the third direction is perpendicular to one of the sides of the polygon.

In some embodiments, each optical structure has a parallelogram shape in the plane of the waveguide, wherein the third direction is perpendicular to one of the sides of the parallelogram.

In some embodiments, each optical structure has a height perpendicular to the plane of the waveguide which varies in the third direction. In some embodiments, the height of each optical structure has a linear slope in a third direction or a stepped approximation of a linear slope. A linear slope or stepped approximation of a linear slope can be used to vary diffraction efficiency for diffraction out of the waveguide, similar to the principle of a Blazed grating.

In some embodiments, a first optical structure and a second optical structure in the first diffractive region each have a different angle of the linear slope, or a different ratio of step length of the stepped approximation of the linear slope. In some embodiments, the second optical structure is offset from the first optical structure in the input direction. By varying the slope in the input direction, the efficiency with which light is coupled out of the waveguide can be varied in the input direction within the first diffractive region.

In some embodiments, a third optical structure and a fourth optical structure in the first diffractive region each have a different third direction. In some embodiments, the second optical structure is offset from the first optical structure in the input direction. By varying the third direction in the input direction, the efficiency with which light is coupled out of the waveguide can be varied in the first direction within the first diffractive region.

In some embodiments, the output DOE further comprises a second diffractive region adjacent to the first diffractive region in a direction perpendicular to the input direction, the second diffractive region having only a single direction of periodicity parallel to the first direction of periodicity, wherein the second diffractive region is configured to couple light out of the waveguide towards the user.

In some embodiments, the output DOE further comprises a third diffractive region adjacent to the second diffractive region in the direction perpendicular to the input direction, the third diffractive region having only the single direction of periodicity parallel to the first direction of periodicity, wherein the third diffractive region is configured to couple light out of the waveguide towards the user with greater efficiency than the second diffractive region.

In some embodiments, the optical device further comprises a return grating offset from the first diffractive region in a direction perpendicular to the input direction, the return grating being configured to diffract light towards the first diffractive region and the return grating having a direction of periodicity in the direction perpendicular to the input direction. The return grating reduces light which leaves the output DOE without being diffracted out of the waveguide, and thereby increases the efficiency of coupling light towards the user.

In some embodiments, the output device further comprises a pre-expansion region between the input DOE and the output DOE, wherein the pre-expansion region has the first direction of periodicity and the second direction of periodicity, and the pre-expansion region is configured to couple light towards the first and second diffractive regions of the output DOE along the input direction, the first direction of periodicity and the second direction of periodicity.

In some embodiments, the output DOE has a central axis parallel to the input direction and further comprises a fourth diffractive region that meets the first diffractive region along the central axis, the fourth diffractive region being a mirror image of the first diffractive region.

### BRIEF DESCRIPTION OF DRAWINGS

Embodiments of the invention are now described, by way of example, with reference to the drawings, in which:
Figure 1 generally illustrates a layout of an optical device for VR/AR;
Figure 2A is a top view of a repeating unit of an output DOE according to the invention; Figures 2B and 2C are side views of alternative repeating units of the output DOE;
Figure 3 is a top view of a complete output DOE according to the invention;
Figures 4A and 4B illustrate example diffraction events in an output DOE according to the invention;
Figure 5 is a top view of an output DOE according to the invention;
Figures 6A to 6C are top and side views of an output DOE according to the invention;
Figure 7 is a top view of an output DOE according to the invention;
Figures 8A and 8B are top views of further output DOEs according to the invention;
Figure 9 is a comparison of uniformity of light output from an output DOE according to the invention against light output from previously-known output DOEs.

### DETAILED DESCRIPTION

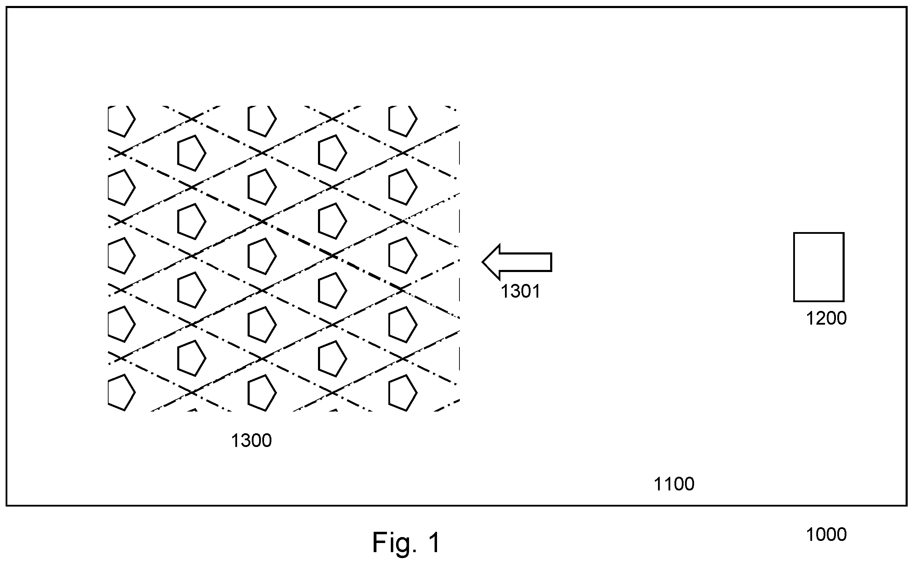

Figure 1 is a view of an optical device 1000 from a top direction (labelled as 1316 in the side view figures), illustrating a known layout for an optical device suitable for virtual reality or extended reality applications.

The optical device comprises a planar waveguide 1100 (perpendicular to the top direction) which may, for example, conform to a set of augmented reality glasses. The planar waveguide may have any shape, and may be completely flat or partially curved depending on the application. In general the planar waveguide is defined by two opposing major surfaces, which cause light to travel by total internal reflection within the waveguide. The waveguide 1100 is formed of a defined refractive index material such as glass or plastic.

An input diffractive optical element, DOE 1200 (such as a diffraction grating) is provided on a surface of the waveguide 1100 or embedded within the waveguide 1100 for coupling light from a projector (not shown) into the waveguide 1100. Light that is coupled into the waveguide travels by total internal reflection towards an output DOE 1300, which may for example include a photonic crystal embedded in the waveguide 1100 or may include surface features located on one or both major surfaces of the waveguide 1100.

In a typical application, a projector introduces at least one beam of image light to the input diffraction grating 1200, where the image light defines an image pupil, which represents a full image (i.e. contains all the angular information that defines an image) that an individual could perceive if their eye was correctly aligned with the image pupil. The output DOE 1300 expands input light in two dimensions within the waveguide and couples light out of the waveguide, similarly to waveguides previously described in WO 2016/020643 or WO 2018/178626.

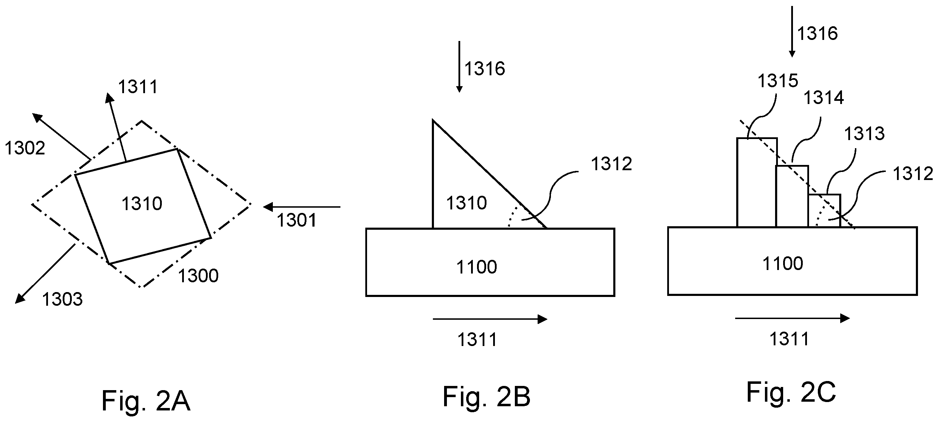

Further details of repeating units in output DOEs 1300 according to the present application will now be described with reference to examples in Figure 1 and Figures 2A to 2C, where Figure 2A shows a single repeating unit illustrated from the top direction perpendicular to the plane of the waveguide 1100 and Figures 2B and 2C are side views of alternative embodiments of the repeating unit.

Output DOEs according to the invention comprise a diffractive region having a first direction of periodicity 1302 and a second direction of periodicity 1303 within the plane of the waveguide. In other words, the output DOE comprises a repeating pattern which repeats in two different directions. Preferably, the length of a period in each direction approximately corresponds to an operative wavelength of light which is strongly diffracted by the output DOE. For example, in an optical device for visible light, the distance between repeating units may be in the range of 400 to 700 nm in each of the first and second directions. The distance between repeating units is preferably equal to the first and second directions, such that diffraction efficiency within the waveguide is approximately equal in each of the first and second directions.

More specifically, the diffractive region comprises an array of optical structures 1310. For example, Figure 1 shows optical structures arranged in a grid, where the repeating units are identified by dashed lines (the dashed lines need not correspond to physical features). The optical structures may for example be regions which are raised or lowered compared to surrounding parts of an output DOE surface, and/or the optical structures may be regions with a different refractive index compared to surrounding parts of the output DOE. Light arrives at the output DOE 1300 from an input direction 1301 (i.e. a direction in which light is travelling within the waveguide via total internal reflection before the light arrives at the output DOE 1300) and, in this example, the first direction 1302 and the second direction 1303 of periodicity are respectively at around +30 and -30 degrees relative to the input direction 1301 within the plane of the waveguide 1100.

Additionally, each of the optical structures is oriented in a third direction 1311 within the plane of the waveguide which is not parallel to either of the first and second directions 1302, 1303.

The definition of "orientation" is not strongly constrained in the application, but we give the following examples of orientation.
1) For example, the optical structures may have one or more straight edges in the plane of the waveguide, and the third direction 1311 may be perpendicular to the straight edge (while also being non-parallel to the first and second directions). For example, each optical structure may have a polygon shape in the plane of the waveguide (such as the pentagon shape of Figure 1 or the parallelogram shape of Figure 2A), and the third direction 1311 may be perpendicular to one of the sides of the polygon.
2) Alternatively, the orientation may correspond to a mathematical skew in the location of the optical structure 1310. For example, in Figures 2B and 2C, which show the optical structure 1310 from a side direction perpendicular to the third direction 1311 and perpendicular to the top direction. In Figures 2B and 2C, it can be seen that a geometric centre of the optical structure 1310 is offset from the centre of mass of the optical structure in the third direction 1311. More specifically, the height of the optical structure 1310 perpendicular to the plane of the waveguide (i.e. opposing the top direction 1316) varies in the third direction 1311, forming a smooth or stepped slope. Stepped configurations, such as Figure 2C which comprises three steps 1313, 1314, 1315, have the advantage of being easier to manufacture using some techniques (such as nano-imprint lithography).
This smooth or stepped slope preferably has an angle 1312 which is chosen to provide a Blaze or pseudo-Blaze effect. In Figures 2B and 2C, the angle 1312 is illustrated with dashed guiding lines (which need not be physical features).

It has been found by the inventors that this third non-parallel direction 1311 (and its difference from the first and second directions 1302, 1303) can increase or decrease the efficiency of an extraction mode in which the optical structures 1311 diffract light out of the waveguide (for example, towards the expected position of a user's eye). Furthermore, varying the third direction 1311 for optical structures 1310 in different regions of the output DOE 1300 can be used as a tuning parameter to increase uniformity of light output from the DOE, by reducing relative efficiency of the extraction mode in bright regions and increasing relative efficiency of the extraction mode in dim regions. This tuning can be performed as an iterative process, using simulations and/or physical test versions of the optical device 1000.

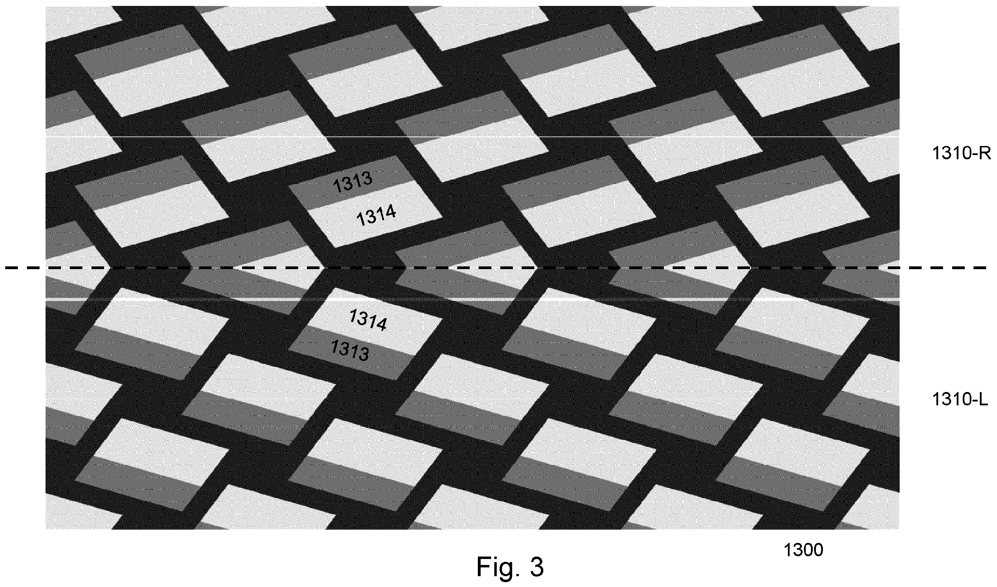

It is often desirable that the output DOE 1300 has symmetry, in particular to increase the uniformity of light expansion. However, the individual optical structures 1310 according to the application may lack symmetry. For example, in the plane parallel to the waveguide, the optical structure 1310 in Figure 2A is not symmetric perpendicular to the input direction 1301. As shown in the top view of Figure 3, overall symmetry of the output DOE 1300 can nevertheless be achieved by including two diffractive regions 1310-L and 1310-R, wherein each diffractive region has a different repeating unit.

More specifically, in Figure 3, the diffractive region 1310-L comprises first optical structures 1310 and the diffractive region 1310-R comprises second optical structures 1310, wherein the first optical structures are mirror images of the second optical structures. Provided that the repeating units are correctly aligned in the diffractive regions 1310-L and 1310-R, this also means that the diffractive region 1310-L is the mirror image of the diffractive region 1310-R, and the overall output DOE 1300 is mirrored around a central axis parallel to the input direction 1301. In this particular example, the optical structures 1310 of the output DOE 1300 of Fig. 3 have a stepped configuration including two steps 1313, 1314.

In the examples of Figures 1 to 3, the third direction 1311 is related to how the optical structures 1310 couple light out of the waveguide, and the first and second directions 1302, 1303 in the array layout of the optical structures 1310 are related to how the optical structures 1310 diffract light within the plane of the waveguide. In other words, the addition of the third direction 1311 partially or entirely decouples control of diffraction efficiencies for the paths travelled by light within the waveguide from diffraction efficiencies for coupling light out of the waveguide. This means that the third direction 1311 can be used to increase uniformity of light coupled towards the user by the output DOE 1300 and address non-uniformities caused by existing output DOE designs.

More specifically, when light interacts with the optical structures 1310, the light may be diffracted within the waveguide one or more times in the first direction 1302 and second direction 1303, such that light follows paths comprising multiple directions within the waveguide 1100, with each path being associated with a respective probability based on the diffraction efficiencies of the interactions which produce such a path. Additionally, each different direction travelled by light within the waveguide has a respective efficiency for coupling out of the waveguide, and this depends on how a current direction of the light compares to the third direction 1311 which is the orientation of the optical structures 1310. Thus, in general, by changing the third direction 1311, the distribution and uniformity of light coupled out of the output DOE 1300 can be controlled.

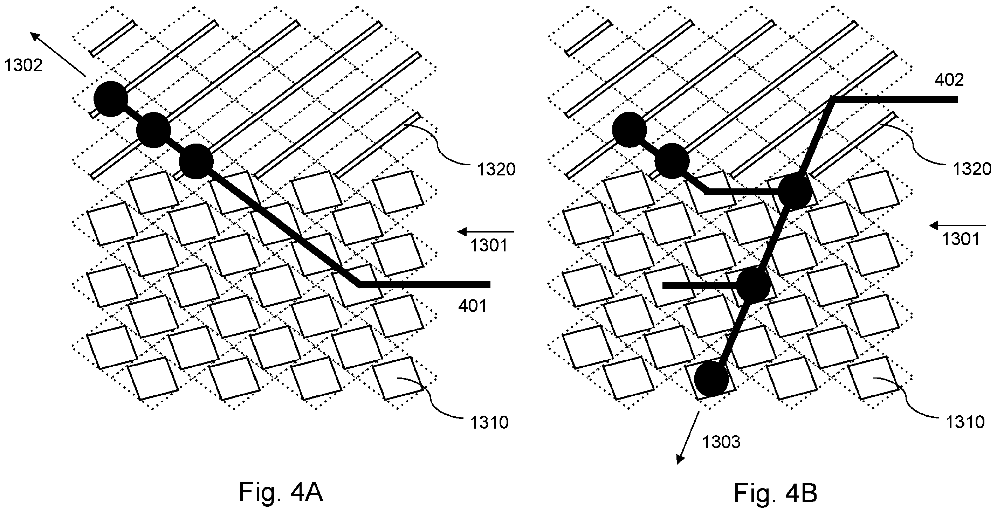

A more specific example of controlling uniformity is shown in Figures 4A and 4B. In Figures 4A and 4B, the two-dimensional array of optical structures 1310 in one diffractive region is combined with a one-dimensional array of linear structures 1320 in a second diffractive region. The direction of periodicity of the linear structures 1320 is parallel to the first direction 1302 - this is illustrated by extending the two-dimensional dashed grid across both diffractive regions (again the dashed lines need not correspond to physical features).

Figure 4A also shows a first path of light 401 (presented as solid black lines) after approaching from the input direction 1301. In path 401, the light interacts with the optical structures 1310 initially and is diffracted within the waveguide in the first direction 1302. The light then interacts with the linear structures 1320 multiple times, each time coupling a proportion of the light out of the waveguide (indicated with blobs). However, each time the light interacts with the linear structures 1320 after interacting with the optical structures 1310, none of the light is diffracted into a different direction within the waveguide, because the light is already travelling parallel to the direction of periodicity of the one-dimensional array of linear structures.

Figure 4B shows a second path of light 402 after approaching from the input direction 1301. In path 402, the light interacts with the linear structures 1320 initially and is diffracted within the waveguide. The light then subsequently interacts with the optical structures 1310 in the array which repeats in both of the first and second directions 1302, 1303. At each interaction, the optical structures 1310 diffract a portion of the light into the input direction 1301, couple a portion of the light out of the waveguide (indicated with blobs), and transmit a remaining proportion of the light without diffraction. Furthermore, after the light is diffracted back into the input direction 1301, it can experience further diffractive interactions within the waveguide into the first and second directions 1302, 1303, leading to more complex paths.

Of course, in reality numerous branching paths are followed with respective probabilities due to the diffractive interactions with the output DOE 1300 which occur along each path, and the effect seen by the user is a superposition of all of the possibilities. Nevertheless, it can be understood from the simple example in Figures 4A and 4B that different diffractive regions can produce a bias in where light is coupled out towards the user, in order to counteract other causes of non-uniformity. More specifically, light which enters the diffractive region comprising linear structures 1320 while travelling in the first direction 1302 does not subsequently enter the diffractive region comprising the optical structures 1310 (as shown in Figure 4A). On the other hand, light which interacts with the optical structures 1310 after initially interacting with the linear structures 1320 can end up being coupled out of the waveguide in either of the diffractive regions (as shown in Figure 4B).

Additionally, in two dimensional diffractive regions, interference generally occurs when light reaches a same point via multiple possible different paths. This interference can cause bright and dark regions due to constructive and destructive interference. The combination of a "one-dimensional" diffractive region comprising linear structures 1320 with a "two-dimensional" diffractive region comprising optical structures 1310 reduces the number of possible paths, and so reduces visible interference effects in the light coupled out for the user.

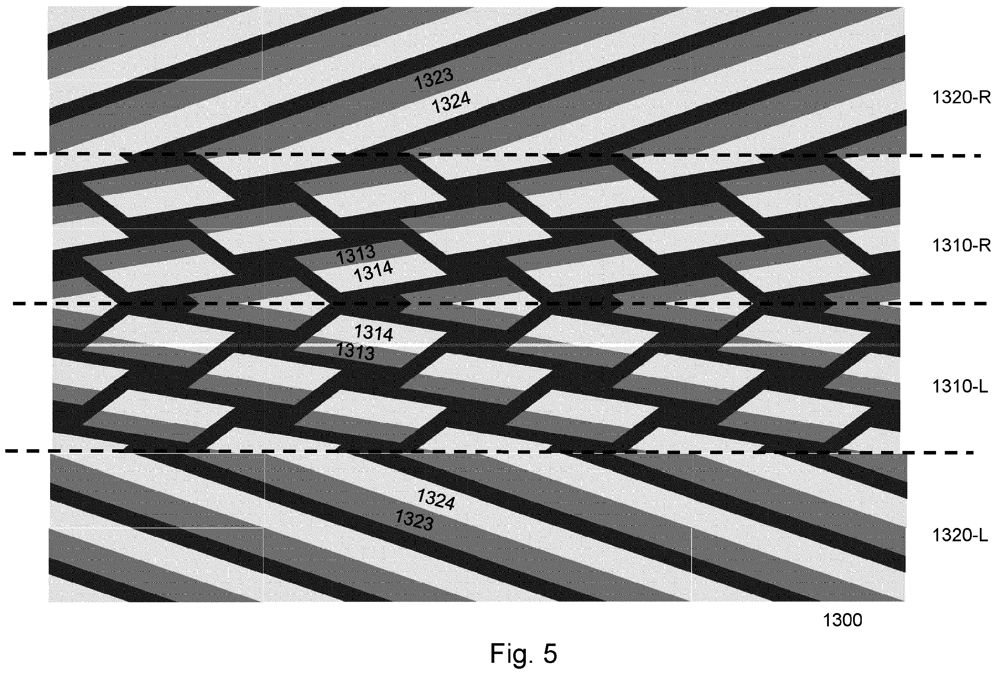

Figure 5 shows a top view of an output DOE 1300 which incorporates the principles shown in Figures 4A and 4B, and also includes mirror image regions for symmetry. The optical structures 1310 are present in a central region of the output DOE 1300, and the linear structures 1320 are present in peripheral regions on either side of the central region. Here, the previously-described biasing of light to couple out of the region comprising linear structures 1320 rather than the region comprising the optical structures 1310 has the effect of reducing the brightness of light coupled out of the central region.

As also shown in Figure 5, the linear structures 1320 may comprise a slope or steps 1323, 1324, to provide a Blaze or pseudo-Blaze effect and tune the efficiency with which light is coupled out of the waveguide when interacting with the linear structures. This tuning may be performed independently from tuning of the optical structures 1310 (in terms of changing the third direction 1311 or the smooth or stepped slope), in order to further improve uniformity of light coupled out of the waveguide.

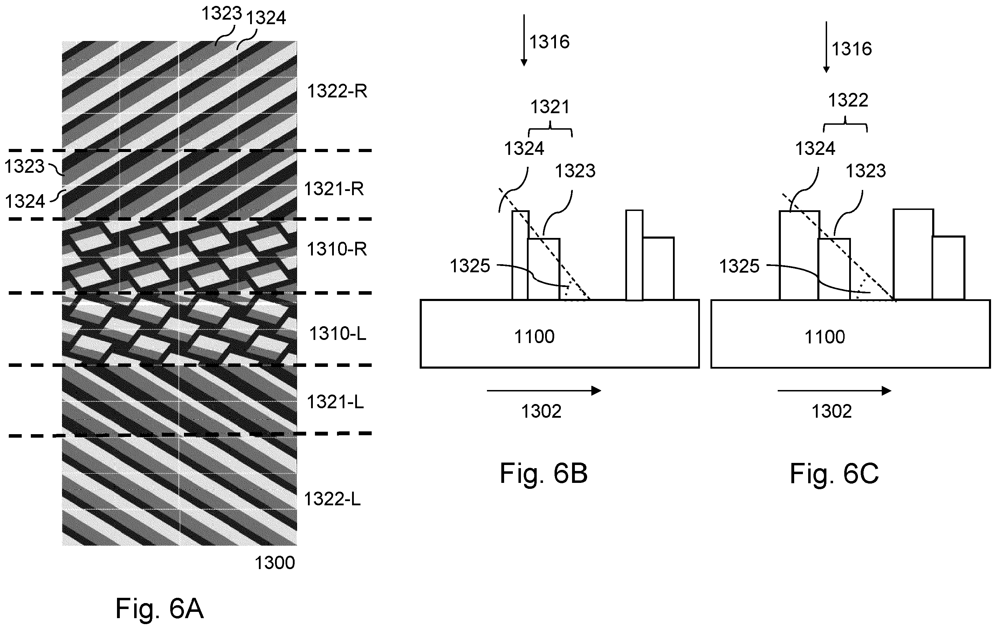

Figure 6A shows a top view of a further output DOE 1300. As shown in Figure 6A, it is possible to blend or smooth the transition between diffraction regions within the output DOE 1300.

More specifically, in Figure 6A, the output DOE 1300 comprises a first linear region comprising first linear structures 1321-L and a second linear region comprising second linear structures 1322-L. These regions are mirrored around the central axis of the output DOE 1300, in the structures 1321-R and 1322-R, respectively. The first linear structures 1321-L and second linear structures 1322-L have different diffraction efficiencies for coupling light out of the waveguide.

More specifically, as shown in Figures 6B and 6C, the first and second linear structures 1321 and 1322 both have a stepped configuration. However, the length of the "top" step 1324 in the first direction 1302 (which is the repeating direction of the linear structures) is greater in the second linear structure 1322 than in the first linear structure 1321. In some cases, this is equivalent to having a lower pseudo-Blaze angle 1325 in the second linear structure 1322 than in the first linear structure 1321. More generally, this increases an effective depth of the second linear structure 1322 relative to the first linear structure 1321. This difference in step lengths has the effect of reducing the out-coupling diffraction efficiency of the linear region 1320 closer to the central axis, and thereby increasing the uniformity of light coupled out of the waveguide over the area of the output DOE 1300.

More generally, the efficiency with which a stepped pseudo-Blaze structure couples light can be tweaked by adjusting the ratios of the step lengths and also by adjusting a ratio between a total length of the pseudo-Blaze structure in the repeating direction (first direction 1302) and the total length of a period in the repeating structure in the repeating direction (first direction 1302).

For example, in addition or alternative to varying the length of the "top" step 1324 in the linear region 1320, the length of the "top" step of the optical structures 1310 may be varied.

Similarly to the different stepped configurations shown in Figures 6B and 6C, the smooth or stepped slope may vary for different optical structures 1310.

In particular, the efficiency eₒᵤₜ of diffracting light out of the waveguide may be relatively low for optical structures 1310 that are close to where light initially reaches the output DOE 1300 along the input direction 1301, and the efficiency of diffracting light out of the waveguide may increase for optical structures 1310 which are further offset in the input direction 1301. This balances against the fact that, as light moves in the input direction 1301 and is probabilistically diffracted out of the waveguide by the output DOE 1300, a smaller amount of light reaches optical structures 1310 that are offset in the input direction 1301. In other words, the amount of light lₒᵤₜ diffracted out of the waveguide at a particular optical structure 1310 is a product of the amount of light l_{guided} which reaches the optical structure while travelling within the waveguide and the diffraction efficiency eₒᵤₜ with which light is coupled out of the waveguide at the particular optical structure 1310, and the optical structures 1310 are configured such that eₒᵤₜ increases as l_{guided} decreases, and lₒᵤₜ is relatively uniform for different optical structures 1310.

The efficiency eₒᵤₜ of diffracting light out of the waveguide for an optical structure 1310 may be controlled similarly to the linear region 1320, for example by varying the length of a "top" step 1314 in different optical structures 1310 or by varying an effective depth in different optical structures 1310. Additionally or alternatively, the efficiency eₒᵤₜ of diffracting light out of the waveguide for an optical structures 1310 may be controlled by changing the third direction 1311, for example by rotating successive optical structures 1310 offset from each other in the input direction 1301 by angle increments. Here, "rotation" is implemented when designing the output DOE 1300, and no motion of the optical structures 1310 relative to the waveguide 1100 is envisaged.

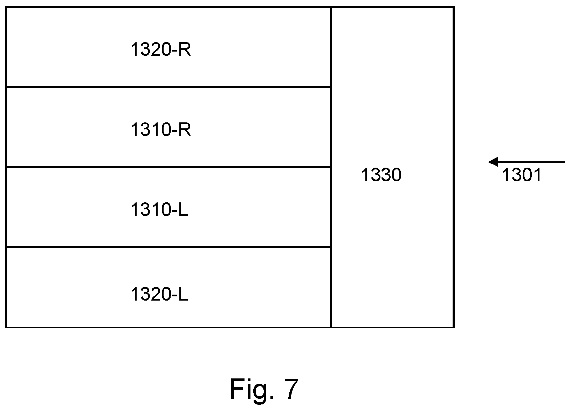

Figure 7 shows a further optional feature of the output DOE 1300. In this example, the output DOE 1300 additionally comprises a pre-expansion region 1330. When light arrives at the output DOE 1300 from an input direction 1301, the light passes through the pre-expansion region 1330 before reaching the optical structures 1310-L, 1310-R or the linear region 1320-L, 1320-R. The pre-expansion region is configured to expand light in two dimensions within the plane of the waveguide, such that light enters the optical structure regions 1310-L, 1310-R (as shown in Figure 4A) and enters the linear regions 1320-L, 1320-R (as shown in Figure 4B) from the input direction 1301. However, unlike the optical structures 1310-L, 1310-R and the linear structures 1320-L, 1320-R, the pre-expansion region 1330 comprises structures which are configured to diffract light within the plane of the waveguide without diffracting light out of the waveguide towards the user. By expanding the light within the waveguide before it reaches the out-coupling structures 1310-L, 1310-R, 1320-L, 1320-R the uniformity of the light coupled towards the user can be further increased.

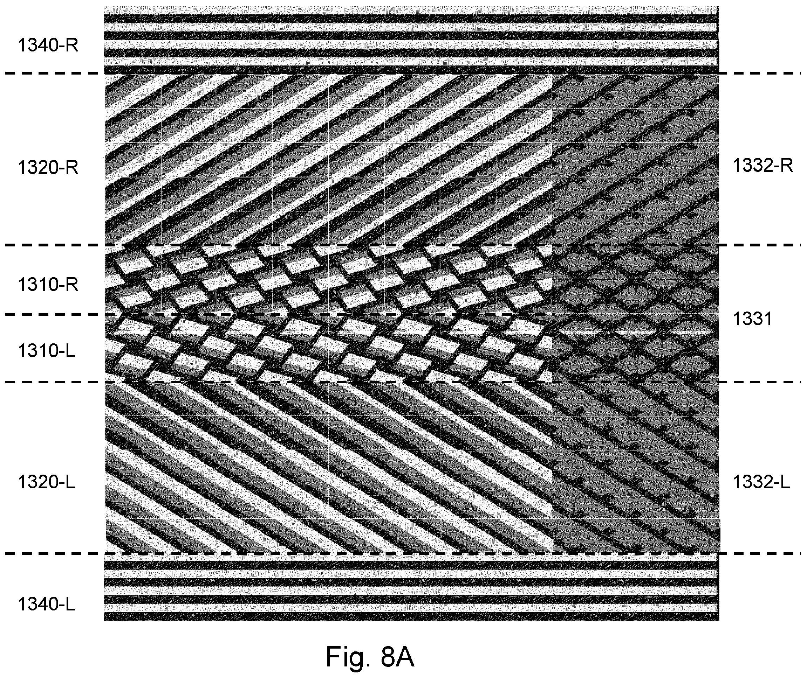

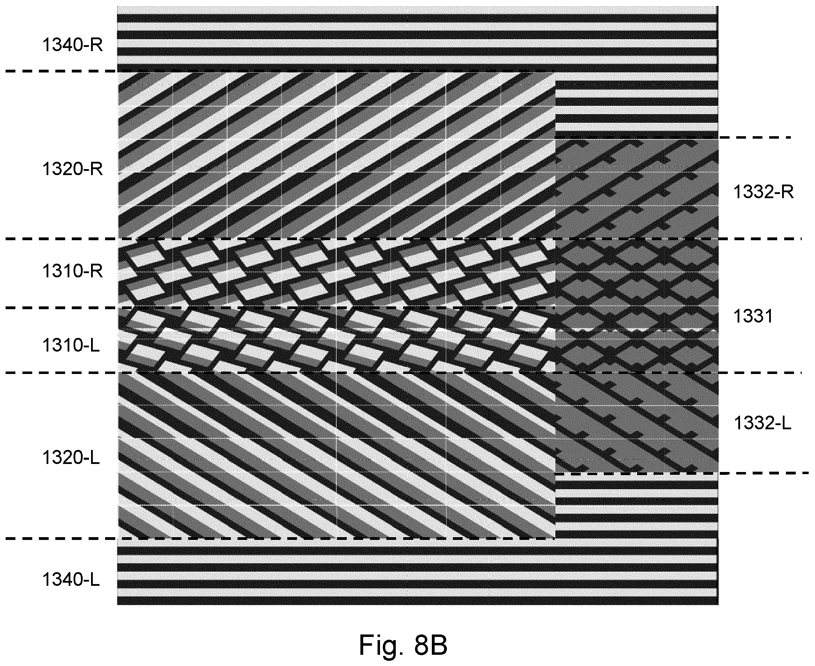

Figures 8A and 8B show additional detail of an embodiment having a pre-expansion region 1330, and also having a further optional feature of return gratings 1340.

Referring to Figure 8A, in this example, the pre-expansion region 1330 comprises a central pre-expansion region 1331 and a peripheral pre-expansion region 1332-L. For symmetry, two peripheral pre-expansion regions 1332-L and 1332-R are provided. The central pre-expansion region is configured two expand light in two dimensions. More specifically, the central pre-expansion region comprises optical structures such as those described in WO 2018/178626 which may, for example, comprise notched parallelograms. On the other hand, the peripheral pre-expansion regions 1332-L, 1332-R comprise notched linear structures as described in PCT/EP2022/084439. With this configuration, light is diffracted approximately equally in both of the first and second directions 1302, 1303 of periodicity in the central pre-expansion region. On the other hand, in the peripheral pre-expansion regions 1332-L, 1332-R, light which has already interacted with the central pre-expansion region and been diffracted in the first or second direction is redirected in the input direction 1301. The peripheral pre-expansion regions 1332-L and 1332-R may be omitted in other embodiments.

Additionally, referring to Figure 8A, the return gratings 1340 are arranged with a further direction of periodicity which is perpendicular to the input direction 1301. As a result, the return gratings 1340 diffract light back towards the central axis of the output DOE 1300. In combination with the optical structures 1310 and linear structures 1320, the return gratings 1340 increase the efficiency with which light is coupled out of the waveguide to the user, by reducing light loss within the waveguide at the sides of the output DOE 1300.

In Figure 8A, the return gratings 1340 extend in the input direction 1301 alongside the pre-expansion region 1330. Alternatively, the return gratings may be provided in the input direction 1301 alongside the optical structure region 1310 alone, or alongside the optical structure region 1310 and the linear region 1320. As a further alternative, as shown in Figure 8B, the return gratings 1340 may extend alongside the pre-expansion region 1330 relatively close to the central axis of the output DOE 1300 and extend alongside the optical structure region 1310 alone, or alongside the optical structure region 1310 and the linear region 1320, relatively far from the central axis of the output DOE 1300. In other words, the return gratings 1340 set boundaries for light expansion perpendicular to the input direction 1301, and the maximum expansion in the pre-expansion region 1330 is less than the maximum expansion in the remaining regions of the output DOE 1300.

In the examples of Figures 7, 8A and 8B, the pre-expansion region 1330 is a part of the output DOE 1300. More generally, the pre-expansion region 1330 may be immediately adjacent or may be offset from the output DOE 1300, and be located between the input DOE 1200 and the output DOE 1300.

Similarly, in the examples of Figures 8A and 8B, the return gratings 1340 are a part of the output DOE 1300. More generally, the return gratings may be immediately adjacent or may be offset from the output DOE 1300 in a direction perpendicular to the input direction 1301. Nevertheless, it is preferable that the offset is small, to avoid a significant time delay before the return gratings 1340 diffract light back towards the central axis of the output DOE 1300.

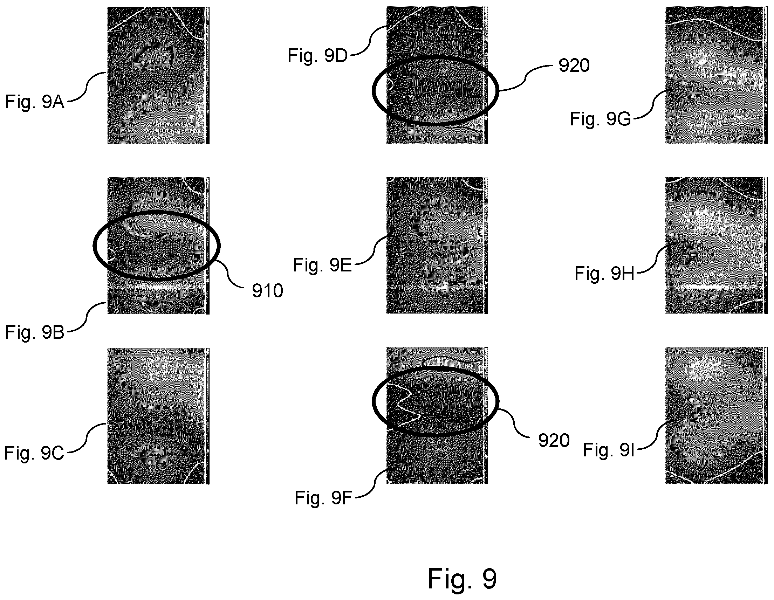

Figures 9A to 9I show results from simulations of the light coupled out to the user from an optical devices in prior art and optical devices as described above.

Figures 9A, 9B and 9C show light coupled out to the user from right, central and left regions of an output DOE in a first prior art example. In this example, there is a dark band 910 in the central region. This is caused by overly-efficient diffraction of light away from the central axis of the output DOE.

Figures 9D to 9F show light coupled out to the user from right, central and left regions of an output DOE in a second prior art example. In this example, there is a dark band 920 in each of the left and right regions. This is caused by insufficient diffraction of light away from the central axis of the output DOE.

Figures 9G to 9I show light coupled out to the user from right, central and left regions of an output DOE in a simulated embodiment of the invention. In this example, dark bands are reduced in both of the central and peripheral regions, as a result of applying the above described techniques and structures, thereby providing a more uniformly bright image to a user of the display.

## Claims

1. An optical device (1000) for use in an augmented reality or virtual reality display, comprising:
a planar waveguide (1100);
an input diffractive optical element, DOE (1200), configured to receive light from a projector and couple the light into the waveguide;
an output DOE (1300) configured to receive light from the input diffractive optical element in an input direction (1301), expand the light in two dimensions and couple the light out of the waveguide (1100) towards a user,
the output DOE (1300) comprising a first diffractive region configured to diffract light within the waveguide (1100), the first diffractive region having a first direction of periodicity (1302) and a second direction of periodicity (1303), wherein an angle between the input direction (1301) and the first direction of periodicity (1302) is equal and opposite to an angle between the input direction (1301) and the second direction of periodicity (1303),
wherein the first diffractive region comprises an array of optical structures (1310), wherein each optical structure is configured to couple light out of the waveguide towards the user, and **characterised in that** each optical structure is oriented in a third direction (1311) that is non-parallel to the first and second directions of periodicity (1302, 1303) and **in that** each optical structure (1310) has a polygon shape in the plane of the waveguide (1100), wherein the third direction (1311) is perpendicular to one of the sides of the polygon.

2. An optical device according to claim 1, wherein each optical structure (1310) has a parallelogram shape in the plane of the waveguide (1100), wherein the third direction (1311) is perpendicular to one of the sides of the parallelogram.

3. An optical device according to any of claims 1 to 2, wherein each optical structure (1310) has a height perpendicular to the plane of the waveguide (1100) which varies in the third direction (1311).

4. An optical device according to claim 3, wherein the height of each optical structure (1310) has a linear slope or a stepped approximation of a linear slope in the third direction (1311).

5. An optical device according to claim 4, wherein a first optical structure and a second optical structure in the first diffractive region each have a different angle of the linear slope, or a different ratio of step lengths of the stepped approximation of the linear slope.

6. An optical device according to claim 5, wherein the second optical structure is offset from the first optical structure in the input direction (1301).

7. An optical device according to any preceding claim, wherein a third optical structure and a fourth optical structure in the first diffractive region each have a different third direction.

8. An optical device according to claim 7, wherein the second optical structure is offset from the first optical structure in the input direction (1301).

9. An optical device according to any preceding claim, wherein the output DOE (1300) further comprises a second diffractive region adjacent to the first diffractive region in a direction perpendicular to the input direction (1301), the second diffractive region having only a single direction of periodicity parallel to the first direction of periodicity (1302), wherein the second diffractive region is configured to couple light out of the waveguide (1100) towards the user.

10. An optical device according to claim 9, wherein the output DOE (1300) further comprises a third diffractive region adjacent to the second diffractive region in the direction perpendicular to the input direction (1301), the third diffractive region having only the single direction of periodicity parallel to the first direction of periodicity (1302), wherein the third diffractive region is configured to couple light out of the waveguide (1100) towards the user with greater efficiency than the second diffractive region.

11. An optical device according to any preceding claim, further comprising a return grating offset from the first diffractive region in a direction perpendicular to the input direction (1301), the return grating being configured to diffract light towards the first diffractive region and the return grating having a direction of periodicity in the direction perpendicular to the input direction (1301).

12. An optical device according to claims 9-11, further comprising a pre-expansion region between the input DOE (1200) and the output DOE (1300), wherein the pre-expansion region has the first direction of periodicity (1302) and the second direction of periodicity (1303), and the pre-expansion region is configured to couple light towards the first and second diffractive regions of the output DOE (1300) along the input direction (1301), the first direction of periodicity (1302) and the second direction of periodicity (1303).

13. An optical device according to any preceding claim, wherein the output DOE (1300) has a central axis parallel to the input direction (1301) and further comprises a fourth diffractive region that meets the first diffractive region along the central axis, the fourth diffractive region being a mirror image of the first diffractive region.

## Patentansprüche

1. Optische Vorrichtung (1000) zur Verwendung in einer Anzeige der erweiterten oder virtuellen Realität, umfassend:
einen planaren Wellenleiter (1100);
ein diffraktives optisches Einkoppelelement, DOE (1200), das so ausgebildet ist, dass es Licht von einem Projektor empfängt und das Licht in den Wellenleiter einkoppelt;
ein diffraktives optisches Auskoppelelement, DOE (1300), das so ausgebildet ist, dass es Licht von dem diffraktiven optischen Einkoppelelement in einer Eingangsrichtung (1301) empfängt, das Licht zweidimensional aufweitet und das Licht aus dem Wellenleiter (1100) zu einem Benutzer hin auskoppelt,
wobei das diffraktive optische Auskoppelelement, DOE (1300), eine erste diffraktive Region umfasst, die so ausgebildet ist, dass sie Licht innerhalb des Wellenleiters (1100) diffraktiert, wobei die erste diffraktive Region eine erste Periodenrichtung (1302) und eine zweite Periodenrichtung (1303) aufweist, wobei ein Winkel zwischen der Eingangsrichtung (1301) und der ersten Periodenrichtung (1302) gleich und entgegengesetzt zu einem Winkel zwischen der Eingangsrichtung (1301) und der zweiten Periodenrichtung (1303) ist,
wobei die erste diffraktive Region ein Array von optischen Strukturen (1310) umfasst, wobei jede optische Struktur so ausgebildet ist, dass sie Licht aus dem Wellenleiter zu dem Benutzer hin auskoppelt, und **dadurch gekennzeichnet, dass** jede optische Struktur in einer dritten Richtung (1311) orientiert ist, die nicht parallel zu der ersten und zweiten Periodenrichtung (1302, 1303) ist, und dass jede optische Struktur (1310) eine Polygonform in der Ebene des Wellenleiters (1100) aufweist, wobei die dritte Richtung (1311) senkrecht zu einer der Seiten des Polygons ist.

2. Optische Vorrichtung nach Anspruch 1, wobei jede optische Struktur (1310) eine Parallelogrammform in der Ebene des Wellenleiters (1100) aufweist, wobei die dritte Richtung (1311) senkrecht zu einer der Seiten des Parallelogramms ist.

3. Optische Vorrichtung nach einem der Ansprüche 1 bis 2, wobei jede optische Struktur (1310) eine zur Ebene des Wellenleiters (1100) senkrechte Höhe aufweist, die in der dritten Richtung (1311) variiert.

4. Optische Vorrichtung nach Anspruch 3, wobei die Höhe jeder optischen Struktur (1310) in der dritten Richtung (1311) eine lineare Neigung oder eine gestufte Annäherung an eine lineare Neigung aufweist.

5. Optische Vorrichtung nach Anspruch 4, wobei eine erste optische Struktur und eine zweite optische Struktur in der ersten diffraktiven Region jeweils einen unterschiedlichen Winkel der linearen Neigung oder ein unterschiedliches Verhältnis von Stufenlängen der gestuften Annäherung an die lineare Neigung aufweisen.

6. Optische Vorrichtung nach Anspruch 5, wobei die zweite optische Struktur zu der ersten optischen Struktur in der Eingangsrichtung (1301) versetzt ist.

7. Optische Vorrichtung nach einem vorstehenden Anspruch, wobei eine dritte optische Struktur und eine vierte optische Struktur in der ersten diffraktiven Region jeweils eine unterschiedliche dritte Richtung aufweisen.

8. Optische Vorrichtung nach Anspruch 7, wobei die zweite optische Struktur zu der ersten optischen Struktur in der Eingangsrichtung (1301) versetzt ist.

9. Optische Vorrichtung nach einem vorstehenden Anspruch, wobei das diffraktive optische Auskoppelelement, DOE (1300), weiter eine zweite diffraktive Region angrenzend an die erste diffraktive Region in einer zur Eingangsrichtung (1301) senkrechten Richtung umfasst, wobei die zweite diffraktive Region nur eine einzige Periodenrichtung parallel zu der ersten Periodenrichtung (1302) aufweist, wobei die zweite diffraktive Region so ausgebildet ist, dass sie Licht aus dem Wellenleiter (1100) zu dem Benutzer hin auskoppelt.

10. Optische Vorrichtung nach Anspruch 9, wobei das diffraktive optische Auskoppelelement, DOE (1300), weiter eine dritte diffraktive Region angrenzend an die zweite diffraktive Region in der zur Eingangsrichtung (1301) senkrechten Richtung umfasst, wobei die dritte diffraktive Region nur die einzige Periodenrichtung parallel zu der ersten Periodenrichtung (1302) aufweist, wobei die dritte diffraktive Region so ausgebildet ist, dass sie Licht aus dem Wellenleiter (1100) mit größerer Effizienz als die zweite diffraktive Region zu dem Benutzer hin auskoppelt.

11. Optische Vorrichtung nach einem vorstehenden Anspruch, die weiter ein Rückführungsgitter, versetzt zu der ersten diffraktiven Region in einer zur Eingangsrichtung (1301) senkrechten Richtung, umfasst, wobei das Rückführungsgitter so ausgebildet ist, dass es Licht zu der ersten diffraktiven Region hin diffraktiert, und wobei das Rückführungsgitter eine Periodenrichtung in der zur Eingangsrichtung (1301) senkrechten Richtung aufweist.

12. Optische Vorrichtung nach Ansprüchen 9-11, die weiter einen Vorerweiterungsbereich zwischen dem diffraktiven optischen Einkoppelelement, DOE (1200), und dem diffraktiven optischen Auskoppelelement, DOE (1300), umfasst, wobei der Vorerweiterungsbereich die erste Periodenrichtung (1302) und die zweite Periodenrichtung (1303) aufweist, und wobei der Vorerweiterungsbereich so ausgebildet ist, dass er Licht zu der ersten und zweiten diffraktiven Region des diffraktiven optischen Auskoppelelements, DOE (1300), entlang der Eingangsrichtung (1301), der ersten Periodenrichtung (1302) und der zweiten Periodenrichtung (1303) hin koppelt.

13. Optische Vorrichtung nach einem vorstehenden Anspruch, wobei das diffraktive optische Auskoppelelement, DOE (1300), eine zur Eingangsrichtung (1301) parallele Zentralachse aufweist und weiter eine vierte diffraktive Region umfasst, die entlang der Zentralachse auf die erste diffraktive Region trifft, wobei die vierte diffraktive Region ein Spiegelbild der ersten diffraktiven Region ist.

## Revendications

1. Dispositif optique (1000) pour utilisation dans un affichage de réalité augmentée ou de réalité virtuelle, comprenant :
un guide d'ondes planaire (1100) ;
un élément optique diffractif d'entrée, DOE (1200), configuré pour recevoir de la lumière provenant d'un projecteur et injecter la lumière dans le guide d'ondes ;
un DOE de sortie (1300), configuré pour recevoir de la lumière provenant de l'élément optique diffractif d'entrée dans une direction d'entrée (1301), étendre la lumière dans deux dimensions et extraire la lumière hors du guide d'ondes (1100), vers l'utilisateur,
le DOE de sortie (1300) comprenant une première région diffractive configurée pour diffracter la lumière à l'intérieur du guide d'ondes (1100), la première région diffractive présentant une première direction de périodicité (1302) et une deuxième direction de périodicité (1303), dans lequel un angle entre la direction d'entrée (1301) et la première direction de périodicité (1302) est égal et opposé à un angle entre la direction d'entrée (1301) et la deuxième direction de périodicité (1303),
dans lequel la première région diffractive comprend un réseau de structures optiques (1310), dans lequel chaque structure optique est configurée pour extraire la lumière hors du guide d'ondes vers l'utilisateur, et **caractérisé en ce que** chaque structure optique est orientée dans une troisième direction (1311) qui est non-parallèle aux première et deuxième directions de périodicité (1302, 1303) et **en ce que** chaque structure optique (1310) présente une forme de polygone dans le plan du guide d'ondes (1100), dans lequel la troisième direction (1311) est perpendiculaire à l'un des côtés du polygone.

2. Dispositif optique selon la revendication 1, dans lequel chaque structure optique (1310) présente une forme de parallélogramme dans le plan du guide d'ondes (1100), dans lequel la troisième direction (1311) est perpendiculaire à l'un des côtés du parallélogramme.

3. Dispositif optique selon l'une quelconque des revendications 1 à 2, dans lequel chaque structure optique (1310) présente une hauteur perpendiculaire au plan du guide d'ondes (1100) qui varie dans la troisième direction (1311).

4. Dispositif optique selon la revendication 3, dans lequel la hauteur de chaque structure optique (1310) présente une pente linéaire ou une approximation en marches d'escalier d'une pente linéaire dans la troisième direction (1311).

5. Dispositif optique selon la revendication 4, dans lequel une première structure optique et une deuxième structure optique dans la première région diffractive présentent chacune un angle différent de la pente linéaire, ou un rapport différent des longueurs de marche de l'approximation en marches d'escalier de la pente linéaire.

6. Dispositif optique selon la revendication 5, dans lequel la deuxième structure optique est en décalage par rapport à la première structure optique dans la direction d'entrée (1301).

7. Dispositif optique selon une quelconque revendication qui précède, dans lequel une troisième structure optique et une quatrième structure optique dans la première région diffractive présentent chacune une troisième direction différente.

8. Dispositif optique selon la revendication 7, dans lequel la deuxième structure optique est en décalage par rapport à la première structure optique dans la direction d'entrée (1301).

9. Dispositif optique selon une quelconque revendication qui précède, dans lequel le DOE de sortie (1300) comprend en outre une deuxième région diffractive adjacente à la première région diffractive dans une direction perpendiculaire à la direction d'entrée (1301), la deuxième région diffractive présentant uniquement une seule direction de périodicité parallèle à la première direction de périodicité (1302), dans laquelle la deuxième région diffractive est configurée pour extraire la lumière hors du guide d'ondes (1100) vers l'utilisateur.

10. Dispositif optique selon la revendication 9, dans lequel le DOE de sortie (1300) comprend en outre une troisième région diffractive adjacente à la deuxième région diffractive dans la direction perpendiculaire à la direction d'entrée (1301), la troisième région diffractive présentant uniquement la seule direction de périodicité parallèle à la première direction de périodicité (1302), dans laquelle la troisième région diffractive est configurée pour extraire la lumière hors du guide d'ondes (1100) vers l'utilisateur avec une efficacité supérieure à celle de la deuxième région diffractive.

11. Dispositif optique selon une quelconque revendication qui précède, comprenant en outre un réseau de retour en décalage par rapport à la première région diffractive dans une direction perpendiculaire à la direction d'entrée (1301), le réseau de retour étant configuré pour diffracter la lumière vers la première région diffractive et le réseau de retour présentant une direction de périodicité dans la direction perpendiculaire à la direction d'entrée (1301).

12. Dispositif optique selon les revendications 9 à 11, comprenant en outre une région de pré-expansion entre le DOE d'entrée (1200) et le DOE de sortie (1300), dans laquelle la région de pré-expansion présente la première direction de périodicité (1302) et la deuxième direction de périodicité (1303), et la région de pré-expansion est configurée pour injecter la lumière vers la première région diffractive et la deuxième région diffractive du DOE de sortie (1300) le long de la direction d'entrée (1301), de la première direction de périodicité (1302) et de la deuxième direction de périodicité (1303).

13. Dispositif optique selon une quelconque revendication qui précède, dans lequel le DOE de sortie (1300) présente un axe central parallèle à la direction d'entrée (1301) et comprend en outre une quatrième région diffractive qui rejoint la première région diffractive le long de l'axe central, la quatrième région diffractive étant l'image miroir de la première région diffractive.
